# EUROPÄISCHE PATENTANMELDUNG

(11) **EP 0 989 389 A2**
(43) Veröffentlichungstag der Anmeldung: **29.03.2000**
(21) Anmeldenummer: 99118737.8
(22) Anmeldetag: 22.09.1999
(51) Int. Cl.: G01F 23/32

(54) **Füllstandsmesseinrichtung**

(30) Priorität: 22.09.1998 DE 19843437
(71) Anmelder: SIEMENS AKTIENGESELLSCHAFT, 80333 München (DE)
(72) Erfinder: Estevez-Garcia, Jaime, 81545 München (DE); Volpe, Francesco, Dr., 63834 Sulzbach a. Main (DE)

(57) **Zusammenfassung**

Eine Füllstandsmeßeinrichtung zur Messung eines Fluidfüllstands in einem Behälter (1) umfaßt einen in dem Behälter (1) angeordneten Schwimmer (6) und einen in dem Behälter (1) angeordneten Magneten (5). Der Magnet ist bewegungsmäßig mit dem Schwimmer (6) gekoppelt und führt bei einer Änderung des Fluidfüllstandes (4, 4') eine der Füllstandsänderung entsprechende Bewegung (7) aus. Ein Magnetfeldsensor (13) ist in dem Einflußbereich eines von dem Magneten erzeugten Magnetfeldes angeordnet und gibt ein für die Füllstandshöhe repräsentatives elektrisches Signal aus.

## Beschreibung

Bei vielen technischen Anlagen oder Geräten ist es erforderlich, den Füllstand eines mit einem Fluid gefüllten Behälters zu messen.

Es ist bereits bekannt, zu diesem Zweck eine Meßvorrichtung mit einem Schwimmer und einem mit diesem gekoppelten mechanisch-elektrischen Bewegungsaufnehmer zu verwenden. Der Bewegungsaufnehmer erfaßt eine durch den veränderlichen Fluidstand bewirkte Positionsveränderung des Schwimmers und stellt an seinem Ausgang ein die Füllstandshöhe charakterisierendes elektrisches Signal zur Verfügung.

Bei vielen Anwendungsfällen ist der Füllstand von entflammbaren oder explosiven Fluiden zu messen. In diesen Fällen ist die Erzeugung eines elektrischen Signals in dem Behälter und die Durchführung desselben durch die Behälterwand oft aus Sicherheitsgründen nicht tolerierbar, weshalb konstruktiv aufwendige mechanische Durchführungen verwendet werden.

Ein weiterer Nachteil von bekannten Füllstandsmeßeinrichtungen besteht in der Verwendung komplizierter und damit kosten- und teilweise auch wartungsintensiver Bauformen. Derartige Füllstandsmeßeinrichtungen kommen für den Einbau in Gebrauchs- und/oder Einwegrodukten aufgrund ihrer hohen Kosten nicht in Frage.

Weitere Schwierigkeiten treten bei der Messung von Fluidfüllständen in Miniaturbehältern auf, da bekannte Füllstandsmeßeinrichtungen für derartige Anwendungsfälle häufig ein zu großes Bauvolumen aufweisen.

Aus der europäischen Patentschrift EP 680 614 B1 ist eine Vorrichtung zum Erfassen einer Winkelposition eines Objektes mittels eines GMR-(Giant Magneto Resistor-)Sensors bekannt.

Der Erfindung liegt die Aufgabe zugrunde, eine einfach aufgebaute und kostengünstig herstellbare Füllstandsmeßeinrichtung zur Messung eines Fluidfüllstands in einem Behälter zu schaffen, die insbesondere bei der Füllstandsmessung von entflammbaren oder explosiven Fluiden oder auch beim Einsatz in Einwegprodukten von gegebenenfalls geringer Baugröße mit Vorteil zur Anwendung kommen kann.

Zur Lösung der Aufgabe sind die Merkmale des Anspruchs 1 vorgesehen.

Ein wesentlicher Aspekt der Erfindung besteht darin, das von einem Magneten erzeugte Magnetfeld mittels eines Magnetfeldsensors zu erfassen und dadurch eine berührungsfrei gewonnene Information über das Füllstandsniveau in dem Behälter zu erhalten. Dabei ist in dem Behälter lediglich die Kombination aus Schwimmer und Magneten, d.h. äußerst kostengünstig herstellbare Produkte enthalten.

Vorzugsweise kommt als Magnetfeldsensor ein magnetoresistiver Sensor zum Einsatz. Magnetoresisitive Sensoren weisen allgemein eine dünne Schicht aus einem magnetoresistiven Material (beispielsweise Ni, Fe, Co, NiFe) auf, das in der Schichtebene magnetisiert ist. Bei einer Drehung der Magnetisierung der Schicht bezüglich der Richtung eines in der Schicht fließenden Meßstromes tritt eine Änderung des elektrischen Widerstands der Schicht auf, die als das für die Füllstandshöhe des Behälters repräsentative Signal erfaßt und gemessen werden kann.

Besonders bevorzugt ist die Verwendung eines GMR-(Giant Magneto Resistor-)Sensors zur Erzeugung des für die Füllstandshöhe repräsentativen elektrischen Signals. Ein GMR-Sensor ist ein aus einem magnetischen Mehrschichtsystem aufgebauter Magnetfeldsensor, der einen besonders ausgeprägten magnetoresistiven Effekt aufweist. Ein erfindungsgemäß einsetzbarer GMR-Sensor ist beispielsweise in der europäischen Patentschrift EP 0 680 614 B1 beschrieben.

Bei der Verwendung eines GMR-Sensors werden einerseits große Meßabstände und Justagetoleranzen zwischen dem GMR-Sensor und dem Magneten ermöglicht und andererseits kann eine praktisch vollständige Störungsunempfindlichkeit gegenüber Veränderungen des Meßabstands während des Gebrauchs erzielt werden. Dem liegt zugrunde, daß ein GMR-Sensor im Unterschied zu anderen bekannten Magnetfeldsensoren (beispielsweise Hall-Sensoren) bei geeigneter Auslegung nur die - vom Meßabstand im wesentlichen unabhängige - Richtung eines äußeren Magnetfeldes bezüglich einer vorgegebenen Bezugsrichtung des GMR-Sensors und nicht dessen Intensität mißt.

Eine konstruktiv einfache Ausführungsvariante der Erfindung kennzeichnet sich dadurch, daß es sich bei dem Magneten um einen Stabmagneten handelt.

Die Kopplung zwischen dem Magneten und dem Schwimmer kann je nach konkretem Anwendungsfall auf vielfältige Weise realisiert sein. Eine einfache und vielfach bevorzugte Maßnahme besteht darin, den Magneten direkt, d.h. ohne Zwischenschaltung eines Betätigungsmechanismus mit dem Schwimmer zu koppeln.

Nach einem bevorzugten Ausführungsbeispiel der Erfindung ist der Magnet um ein im wesentlichen parallel zur Füllstandsoberfläche des Fluids orientierte Rotationsachse drehbar an dem Behälter angelenkt. Die Rotationsachse kann den Magneten dabei beispielsweise in einem Zentralbereich oder in einem Endbereich in Querrichtung durchlaufen.

Ein alternatives Ausführungsbeispiel kennzeichnet sich dadurch, daß der Magnet mittels einer sich im wesentlichen senkrecht zu der Füllstandsoberfläche erstreckenden Kulisse in dem Behälter geführt ist.

Der Magnet und der Schwimmer können in zweckmäßiger Weise auch in Form einer einzigen baulichen Einheit verwirklicht sein. Diese bauliche Einheit kann beispielsweise durch ein gegebenenfalls geschäumtes Kunststoffmaterial mit eingelagerten Ferrit-Partikeln realisiert sein.

Die Erfindung wird nachfolgend in beispielhafter Weise anhand von Ausführungsbeispielen unter Bezugnahme auf die Zeichnung erläutert; in dieser zeigt:
- Fig. 1a: eine schematische Perspektivansicht eines Flüssigkeitsbehälters mit einem darin enthaltenen, drehbar gelagerten Stabmagneten mit Schwimmer;
- Fig. 1b: eine schematische Seitenschnittansicht des in Fig. 1a gezeigten Behälters, eingesetzt in ein Gerät;
- Fig. 2a: eine perspektivische Prinzipdarstellung des Aufbaus eines GMR-Widerstands;
- Fig. 2b: ein Schaltbild einer Auswerteschaltung zur Messung des elektrischen Widerstands eines den in Fig. 2a gezeigten GMR-Widerstand enthaltenden GMR-Sensors;
- Fig. 3a: eine schematische Schnittdarstellung eines Flüssigkeitsbehälters mit darin enthaltenem Stabmagneten und Schwimmer gemäß einem weiteren Ausführungsbeispiel der vorliegenden Erfindung;
- Fig. 3b: eine schematische Draufsicht des in Fig. 3a dargestellten Flüssigkeitsbehälters; und
- Fig. 4: eine schematische Darstellung eines weiteren Ausführungsbeispiels der vorliegenden Erfindung.

Fig. 1a zeigt einen geschlossenen Behälter 1, der mit einer Flüssigkeit 2 gefüllt ist. Bei dem Behälter 1 kann es sich beispielsweise um einen mit Tinte gefüllten Vorratsbehälter für einen Tintenstrahldrucker handeln.

Der Behälter 1 weist an seiner Unterseite eine Abführöffnung 3 auf, über die die Flüssigkeit 2 den Behälter 1 verlassen kann. Ferner sind in nicht dargestellter Weise zur Entlüftung des Behälters 1 gegebenenfalls im Deckenbereich angeordnete Entlüftungsöffnungen vorgesehen.

Je nach Füllstand weist die Flüssigkeit 2 unterschiedliche Flüssigkeitsspiegel auf, wobei ein oberer Flüssigkeitsspiegel 4 mit durchgezogenen Linien und ein unterer Flüssigkeitsspiegel 4' mit gestrichelten Linien dargestellt sind. Im Behälterinnenraum befindet sich ferner ein Stabmagnet 5, an dessen einem Polende (hier: dem Südpol) ein Schwimmer 6 angebracht ist. Der Stabmagnet 5 ist in seinem Längsmittenbereich drehbar an dem Behälter 1 angelenkt, wobei aufgrund des Auftriebes, den der Schwimmer 6 in der Flüssigkeit 2 erfährt, stets sichergestellt ist, daß das schwimmerseitige Ende des Stabmagneten 5 sich auf der Höhe des aktuellen Flüssigkeitsspiegels 4 bzw. 4' befindet.

Bei einem Abfallen des Flüssigkeitsspiegels 4 auf den tiefer liegenden Flüssigkeitsspiegel 4' erfolgt demnach eine Drehung des Stabmagneten 5 entsprechend der Pfeilrichtung der gestrichelt eingezeichneten Bewegungslinie 7. Die Lage des Magneten 5 beim Flüssigkeitsspiegel 4' ist in Fig. 1a ebenfalls durch gestrichelte Linien dargestellt.

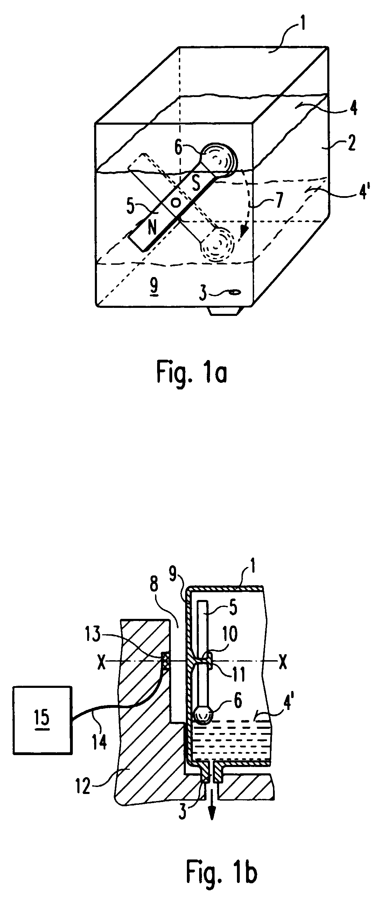

Fig. 1b zeigt den Behälter 1 eingesetzt in eine Einbauaufnahme 8 eines nicht näher dargestellten Geräts, beispielsweise eines Tintenstrahldruckers. Die Rotationsachse X des Magneten 5 mit Schwimmer 6 ist durch einen integral mit einer Behälterseitenwand 9 ausgebildeten Achsvorsprung 10 mit einer den Magneten 5 gegen Abfallen sichernden Erweiterung 11 an seinem freien Ende realisiert.

An einem gerätefesten Gehäuseabschnitt 12 der Einbauaufnahme 8 ist ein GMR-Sensor 13 vorzugsweise so positioniert, daß sich die Rotationsachse X durch den GMR-Sensor 13 erstreckt. Der GMR-Sensor 13 steht über eine elektrische Verbindung 14 mit einer den elektrischen Widerstand des GMR-Sensors 13 messenden Auswerteschaltung 15 in Verbindung.

Bei einer durch eine Flüssigkeitsniveauänderung bewirkten Drehverstellung des Magneten 5 verändert sich die Richtung des an dem Ort des GMR-Sensors 13 auftretenden magnetischen Feldes. Der gegenüber einer Richtungsänderung des Magnetfeldes empfindliche GMR-Sensor 13 ändert daraufhin seinen elektrischen Widerstand, wobei die Widerstandsänderung wie bereits erwähnt von der Auswerteschaltung 15 registriert wird.

Da die Meßwerterfassung nicht induktiver Natur ist, spielt die Drehgeschwindigkeit des Magneten 5 keine wesentliche Rolle, d.h. es lassen sich die bei Füllstandsänderungen typischerweise auftretenden quasi-statischen Bewegungsvorgänge ohne weiteres erfassen. Ferner ist die genaue Einbaulage des Behälters 1 in dem Gehäuseabschnitt 12 und damit der Meßabstand zwischen dem Magneten 5 und dem GMR-Sensor 13 weitgehend ohne Bedeutung, da durch sie die Richtung des von dem Magneten 5 erzeugten Magnetfeldes am Ort des GMR-Sensors 13 nicht wesentlich beeinflußt wird.

In nicht dargestellter Weise kann der Stabmagnet 5 auch bezüglich seiner Längserstreckung außermittig, beispielsweise an seinem schwimmerfernen Ende (Nordpol) an dem Behälter 1 verschwenkbar angelenkt sein. Diese Variante hat den Vorteil, daß aufgrund der dann verlängerten Bewegungslinie 7 des Schwimmers 6 ein größerer Meßbereich überwacht werden kann.

Nachteilig kann gegebenenfalls jedoch die geringere Meßgenauigkeit dieser Variante sein, die darauf zurückzuführen ist, daß eine gleiche Füllstandsänderung eine vergleichsweise geringere Winkelverstellung des Stabmagneten 5 zur Folge hat.

Fig. 2a dient der Erläuterung des Meßprinzips bei Verwendung eines GMR-Sensors 13 und zeigt zu diesem Zweck in beispielhafter Weise den prinzipiellen Schichtaufbau eines in einem derartigen Sensor 13 vorhandenen GMR-Widerstandes.

Über einer unteren Fe-Schicht 20 ist ein Mehrschichtsystem aus alternierend angeordneten unmagnetischen Cu-Schichten 22 und hartmagnetischen Co-Schichten 21, 21' ausgebildet. Die durch Pfeile veranschaulichten Magnetisierungen der Co-Schichten 21, 21' sind bei einer geeigneten Dicke der zwischenliegenden Cu-Schichten 22 bezüglich aufeinanderfolgender Schichten 21 und 21' antiparallel orientiert, d.h. das Cu-Co-Mehrschichtsystem 21, 21', 22 realisiert einen künstlichen Antiferromagneten. Über dem Mehrschichtsystem 21, 21', 22 ist eine obere Deckschicht 23 aus Fe angebracht.

Bei einem äußeren Magnetfeld B entsprechend der Orientierung des Stabmagneten 5 stellt sich die Magnetisierung M der oberen weichmagnetischen Fe-Deckschicht 23 parallel zu dem äuße-ren Magnetfeld B ein. Die hartmagnetischen Co-Schichten 21, 21' behalten ihre vorgegebene antiparallele Magnetisierungen bei. Der als GMR-Widerstand bezeichnete elektrische Widerstand des Cu-Co-Mehrschichtsystems 21, 21', 22 in Schichtrichtung ist von dem Winkel ϕ zwischen der Richtung der Magnetisierung M der Fe-Deckschicht 23 und der durch die alternierende Magnetisierung des Cu-Co-Mehrschichtsystems 21, 21', 22 definierten Bezugsrichtung abhängig, d.h. ändert sich mit der Richtung des äußeren Magnetfeldes B.

Sofern das äußere Magnetfeld B eine für die vollständige Ummagnetisierung der Fe-Deckschicht 23 ausreichende Stärke aufweist, ist der GMR-Widerstand nicht von der Stärke des Magnetfeldes B abhängig. Aus diesem Grund wird der GMR-Sensor 13 vorzugsweise im Sättigungsbereich, d.h. bei vollständiger Ausrichtung der Magnetisierung M der Fe-Deckschicht 23 in Richtung des äußeren Magnetfelds B betrieben und ist dann ausschließlich gegenüber Richtungsänderungen des äußeren Magnetfeldes B empfindlich.

Bei einer geeigneter Auslegung des GMR-Sensors 13 kann der Sättigungsbereich bereits bei einer magnetischen Feldstärke von etwa 3 kA/m oder weniger erreicht werden. Dabei ist ein maximaler Meßabstand von etwa 25 mm oder mehr zwischen dem GMR-Sensor 13 und dem Magneten 5 erreichbar.

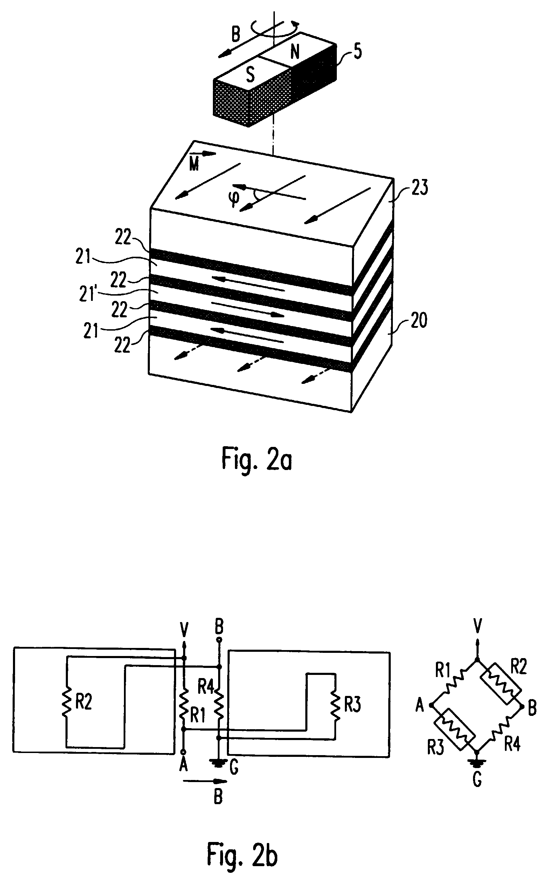

Nach Fig. 2b (linker Teil) können in dem GMR-Sensor 13 beispielsweise zwei GMR-Widerstände R1, R4 vorhanden sein, die unter Verwendung von zwei Vergleichswiderständen R2, R3 in Form einer Wheatstone-Brücke verschaltet sind. Bei den beiden Vergleichswiderständen R2, R3 kann es sich um übliche ohmsche (d.h. Magnetfeld-unabhängige) Widerstände oder um gegenüber dem äußeren Magnetfeld B abgeschirmte, in dem GMR-Sensor 13 ausgebildete GMR-Widerstände handeln. R2, R3 können aber auch Magnetfeld-abhängig sein.

Über einen Anschluß V wird eine vorgegebene Betriebsspannung oder ein vorgegebener Konstantstrom an die Wheatstone-Brückenschaltung R1, R2, R3 und R4 angelegt, wobei der Anschluß G auf Erdpotential liegt. Eine Änderung des Widerstandswertes der GMR-Widerstände R1 und R4 kann dann als Spannungsänderung an den Brückenabgriffen A und B nachgewiesen werden.

Im rechten Teil von Fig. 2b ist ein Ersatzschaltbild der im linken Teil der Figur dargestellten Schaltung gezeigt.

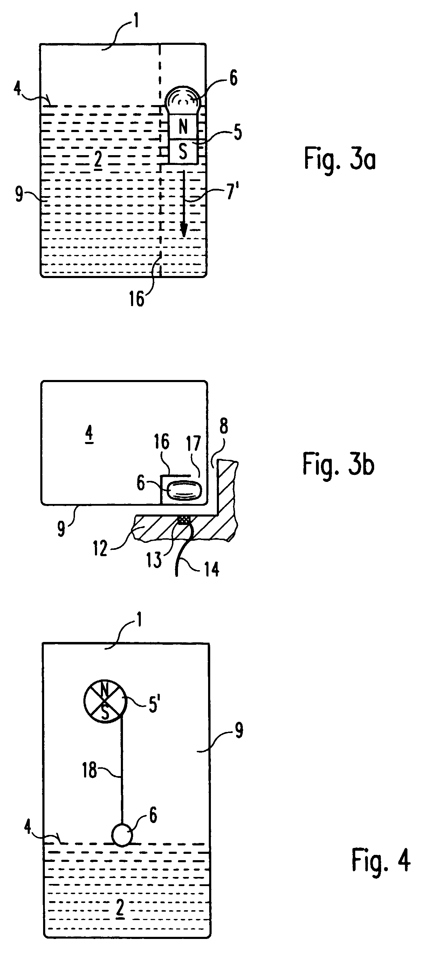

Die Fig. 3a und 3b zeigen ein weiteres Ausführungsbeispiel der Erfindung, bei dem vergleichbare Teile wie in den vorhergehenden Figuren mit identischen Bezugszeichen gekennzeichnet sind.

Der Stabmagnet 5 mit Schwimmer 6 ist hier in dem Behälter 1 in Vertikalrichtung frei beweglich und wird lediglich durch eine im wesentlichen vertikal verlaufende und im Querschnitt rechtwinklige Kulisse 16 in der Nähe der Behälterseitenwand 9, beispielsweise in einem Eckenbereich des Behälters 1 gehalten. Die Kulisse 16 weist ein oder mehrere gegebenenfalls spaltförmige Durchtrittsöffnungen 17 auf, über die der Kulissen-Innenbereich mit dem übrigen Behältervolumen in Fluid-Austauschverbindung steht.

Der GMR-Sensor 13 ist wiederum an einem gerätefesten Gehäuseabschnitt 12 der Einbauaufnahme 8 gegenüber der durch die Kulisse 16 vorgegebenen Bewegungslinie 7' des Stabmagneten 5 mit Schwimmer 6 angeordnet. Je nach der gewünschten Meßaufgabe kann der GMR-Sensor 13 beispielsweise etwa auf halber Höhe oder im bodennahen Bereich des Behälters 1 positioniert sein. Wenn der GMR-Sensor 13 etwa auf halber Höhe des Behälters 1 positioniert ist, kann er die Position des Stabmagneten 5 sowohl in dem oberhalb des GMR-Sensors 13 liegenden Annäherungsbereich als auch in dem darunter liegenden Entfernungsbereich der Bewegungslinie 7' registrieren. Ein im bodennahen Bereich des Behälters 1 angeordneter GMR-Sensor 13 kann beispielsweise als Signalgeber für eine Reserve- oder Behälterwechselanzeige eingesetzt werden. Es ist auch möglich, entlang der Bewegungslinie 7' eine Vielzahl von GMR-Sensoren 13 anzuordnen und auf diese Weise einen verlängerten Meßbereich zu erhalten.

Der GMR-Sensor 13 kann auch unter einem vorgegebenen Abstand seitlich versetzt zu der Bewegungslinie 7' des Stabmagneten 5 mit Schwimmer 6 angeordnet sein.

Fig. 4 zeigt ein weiteres Ausführungsbeispiel der Erfindung, bei dem wiederum entsprechende Teile wie in den zuvor beschriebenen Figuren mit den gleichen Bezugszeichen versehen sind.

Ein Behälter 1 ist bis zu einem gewissen Füllstand (Flüssigkeitsspiegel 4) mit einer Flüssigkeit 2 gefüllt. Auf der Flüssigkeit 2 schwimmt ein Schwimmer 6, der an einem Ende einer Schnur 18 befestigt ist, die mit ihrem anderen Ende auf einer Aufwickelrolle aufgewickelt ist, welche sich in Fig. 4 verdeckt hinter einer Magnetscheibe 5' befindet und drehtest mit dieser gekoppelt ist. Die Aufwickelrolle und die Magnetscheibe 5' befinden sich in dem Behälter 1 und können in ähnlicher Weise wie in den Fig. 1a und 1b dargestellt an diesem drehbar angebracht sein.

Die Aufwickelrolle ist ferner mit einer Rückzugsfeder gekoppelt, welche eine im Gegenuhrzeigersinn wirkende Kraft auf die Aufwickelrolle ausübt, wobei die Stärke der Kraft so gewählt ist, daß die Schnur 18 unabhängig von der Füllstandshöhe stets gespannt gehalten wird.

Außerhalb des Behälters 1 ist gegenüberliegend und vorzugsweise koaxial mit der Magnetscheibe 5' in nicht dargestellter Weise ein GMR-Sensor 13 angebracht.

Bei einem Absinken des Flüssigkeitsstandes rollt sich die Schnur 18 von der Aufwickelrolle ab und verdreht dabei die Richtung des von der Magnetscheibe 5' erzeugten Magnetfeldes. Diese Richtungsverstellung des Magnetfeldes kann in der bereits beschriebenen Weise von dem GMR-Sensor 13 als Widerstandsänderung desselben erfaßt und durch eine Auswerteschaltung 15 in geeigneter Weise nachgewiesen werden.

Das in Fig. 4 dargestellte Ausführungsbeispiel beruht ähnlich wie das in den Fig. 1a und 1b gezeigte Ausführungsbeispiel auf einer Umsetzung einer Linearbewegung des Flüssigkeitsspiegels 4 in eine Drehbewegung des Magneten 5 bzw. 5', weist jedoch im Vergleich zu dem letzgenannten einen wesentlich größeren Meßbereich auf.

Funktionell sind alle dargestellten Ausführungsbeispiele unmittelbar miteinander vergleichbar, und sie ermöglichen stets eine einfache, berührungslose und insbesondere aufgrund der geringen Kosten der in dem Behälter 1 benötigten Komponenten (Magnet 5, Schwimmer 6) ausgesprochen vielfältig anwendbare Messung eines Flüssigkeitsfüllstandes in einem Behälter 1.

## Patentansprüche

1. Füllstandsmeßeinrichtung zur Messung eines Fluidfüllstands in einem ein Fluid (2) enthaltenden Behälter (1), mit
- einem in dem Behälter (1) angeordneten Schwimmer (6), dessen spezifisches Gewicht kleiner als das spezifische Gewicht des Fluids (2) ist,
- einem in dem Behälter (1) angeordneten Magneten (5, 5'), insbesondere Permanentmagneten, der mit dem Schwimmer (6) bewegungsmäßig gekoppelt ist und bei einer Änderung des Füllstandes (4, 4') eine der Füllstandsänderung entsprechende Bewegung, insbesondere Rotations- oder Linearbewegung (7, 7') ausführt, und
- einem außerhalb des Behälters (1) in dem Einflußbereich eines von dem Magneten (5, 5') erzeugten Magnetfeldes (B) angeordneten Magnetfeldsensors (13) zur Ausgabe eines für die Höhe des Füllstands (4, 4') des Behälters (1) repräsentativen elektrischen Signals, wobei der Magnetfeldsensor dazu dient, eine berührungslose Information über das Füllstandsniveau zu erhalten und wobei der Magnetfeldsensor ein magnetoresistiver Sensor ist..

2. Füllstandsmeßeinrichtung nach Anspruch 1,
**dadurch gekennzeichnet,**
daß es sich bei dem Magnetfeldsensor um einen GMR-Sensor (13) handelt.

3. Füllstandsmeßeinrichtung nach Anspruch 1 oder 2,
**dadurch gekennzeichnet,**
daß es sich bei dem Magneten um einen Stabmagneten (5) handelt.

4. Füllstandsmeßeinrichtung nach einem der vorhergehenden Ansprüche,
**dadurch gekennzeichnet,**
daß der Magnet (5) ohne Zwischenschaltung eines Betätigungsmechanismus direkt mit dem Schwimmer (6) gekoppelt ist.

5. Füllstandsmeßeinrichtung nach einem der vorhergehenden Ansprüche,
**dadurch gekennzeichnet,**
daß der Magnet (5, 5') um eine im wesentlichen parallel zur Füllstandsoberfläche (4, 4') des Fluids (2) orientierte Rotationsachse (X) rotierbar an dem Behälter (1) angelenkt ist.

6. Füllstandsmeßeinrichtung nach Anspruch 5,
**dadurch gekennzeichnet,**
daß die Rotationsachse (X) den Magneten (5, 5') in einem Zentralbereich desselben in Querrichtung durchläuft.

7. Füllstandsmeßeinrichtung nach Anspruch 5,
**dadurch gekennzeichnet,**
daß die Rotationsachse (X) den Magneten (5) in einem Endbereich desselben in Querrichtung durchläuft.

8. Füllstandsmeßeinrichtung nach einem der Ansprüche 1 bis 4,
**dadurch gekennzeichnet,**
daß der Magnet (5) mittels einer sich im wesentlichen senkrecht zu der Füllstandsoberfläche (4, 4') erstreckenden Kulisse (16) in dem Behälter (1) geführt ist.

9. Füllstandsmeßeinrichtung nach einem der vorhergehenden Ansprüche,
**dadurch gekennzeichnet,**
daß der Magnet (5) und der Schwimmer (6) in Form einer einzigen baulichen Einheit, insbesondere eines Kunststoff-Ferittpulvergefüges verwirklicht sind.

10. Füllstandsmeßeinrichtung nach einem der vorhergehenden Ansprüche,
**dadurch gekennzeichnet,**
daß es sich bei dem Behälter (1) um einen Voratsbehälter für eine Verbrauchsflüssigkeit (2), insbesondere um einen Tintenbehälter für eine Tintenstrahldruckereinheit handelt.
